# EUROPEAN PATENT SPECIFICATION

(11) **EP 4 027 050 B1**
(45) Date of publication and mention of the grant of the patent: **26.11.2025**
(21) Application number: 21212878.9
(22) Date of filing: 07.12.2021
(51) Int. Cl.: F17C 13/04

(54) **DUAL SOLENOID INITIATOR VALVE FOR COMPRESSED FLUID SOURCES**
DOPPELMAGNETINITIATORVENTIL FÜR DRUCKFLUIDQUELLEN
VANNE D'AMORÇAGE À SOLÉNOÏDE DOUBLE POUR SOURCES DE FLUIDES COMPRIMÉS

(30) Priority: 23.12.2020 IN 202041056064; 11.11.2021 US 202117524476
(43) Date of publication of application: 13.07.2022
(73) Proprietor: Goodrich Corporation, Charlotte, NC 28217-4578 (US)
(72) Inventor: JNANEGOWDA, Vasanthakumara, 560048 Bangalore, INDIA (IN); JOHN, Poly Puthur, 695015 Kerala, INDIA (IN)
(74) Representative: Dehns

(56) References cited:
- GB-A- 2 280 313
- US-A- 5 441 232
- US-A1- 2009 140 188
- US-A1- 2020 191 279

## Description

### CROSS-REFERENCE TO RELATED APPLICATIONS

This application claims priority to India Patent Application No. 202041056064, filed December 23, 2020 and titled "DUAL SOLENOID INITIATOR VALVE FOR COMPRESSED FLUID SOURCES."

### FIELD

The present disclosure relates to compressed fluid sources and, in particular, to a dual solenoid initiator valve for a compressed fluid source of an evacuation assembly.

### BACKGROUND

An emergency evacuation assembly may be used to exit an aircraft absent a jet way or other suitable means of egress for passengers. The evacuation assembly may include an inflatable slide and one or more compressed fluid source(s) configured to inflate the slide. Current compressed fluid sources may include an initiator valve assembly configured to open in response to deployment of the evacuation slide, thereby allowing fluid to flow to the evacuation slide. US 2009/140188 relates to a solenoid actuator.

### SUMMARY

A dual solenoid valve for a compressed fluid source is provided in claim 1. In accordance with various embodiments, the dual solenoid valve may comprise a bobbin, a first solenoid coil located around the bobbin, and a second solenoid coil located radially outward of the first solenoid coil. An insulating layer may be located between the first solenoid coil and the second solenoid coil. A plunger may be biased away from the bobbin.

In various embodiments, a first set of lead wires may be electrically coupled to the first solenoid coil, and a second set of lead wires may be electrically coupled to the second solenoid coil. In various embodiments, the second solenoid coil may be arranged in parallel to the first solenoid coil.

In various embodiments, a wire gauge of the second solenoid coil and a winding depth of second solenoid coil may be selected to generate a magnetic flux value that is equal to a magnetic flux value generated by the first solenoid coil. In various embodiments, a solenoid resistance coil value of the first solenoid coil may be equal to a solenoid resistance coil value of the second solenoid coil.

In various embodiments, a valve seal may be configured to translate with the plunger. In various embodiments, a fluid fitting may be configured to form a fluid tight seal with the valve seal. The fluid fitting may define a fluid path. In a closed position, the valve seal may fluidly seal an inlet of the fluid path from an outlet of the fluid path.

A valve assembly for a compressed fluid source is also disclosed herein. In accordance with various embodiments, the valve assembly may comprise a valve housing defining a valve inlet, a valve outlet, and a main fluid channel fluidly connecting the valve inlet and the valve outlet. A spool may be located in the main fluid channel. The spool may be configured to fluidly seal the valve outlet from the valve inlet when the valve assembly is in a closed position. A dual solenoid valve may be configured to open and close the valve assembly. The dual solenoid valve may comprise a bobbin, a first solenoid coil located around the bobbin, a second solenoid coil located radially outward of the first solenoid coil, an insulating layer located between the first solenoid coil and the second solenoid coil, and a plunger biased away from the bobbin.

In various embodiments, a fluid fitting may define a fluid path. The fluid path defined may be configured to fluidly connect an upper section of the main fluid channel and a secondary fluid channel defined by the valve housing. In various embodiments, in the closed position, the dual solenoid valve is configured to seal an outlet of the fluid path defined by the fluid fitting from an inlet of the fluid path defined by the fluid fitting.

In various embodiments, the dual solenoid valve may further comprise a valve seal configured to form a sealing interface with the fluid fitting when the valve assembly is in the closed position. In an open position, a gap may be created between the fluid fitting and the valve seal. The gap may be configured to allow fluid to flow from the inlet of the fluid path to the outlet of the fluid path.

In various embodiments, first set of lead wires may be electrically coupled to the first solenoid coil, and a second set of lead wires may be electrically coupled to the second solenoid coil.

In various embodiments, the second solenoid coil may be arranged in parallel to the first solenoid coil. In various embodiments, a wire gauge of the second solenoid coil and a winding depth of second solenoid coil may be selected to generate a magnetic flux value that is equal to a magnetic flux value generated by the first solenoid coil.

In various embodiments, a solenoid resistance coil value of the first solenoid coil may be equal to a solenoid resistance coil value of the second solenoid coil.

An evacuation assembly is also disclosed herein. In accordance with various embodiments, the evacuation assembly may comprise a compressed fluid source and a valve assembly configured to control a flow of fluid from the compressed fluid source. The valve assembly may comprise: a valve housing coupled to the compressed fluid source and a dual solenoid valve configured to open and close and the valve assembly. The valve housing may define a valve inlet, a valve outlet, and a main fluid channel fluidly connecting the valve inlet and the valve outlet. The dual solenoid valve may include a first solenoid coil and a second solenoid coil arranged in parallel with the first solenoid coil.

In various embodiments, the dual solenoid valve may further comprise a bobbin, an insulating layer, and plunger. The first solenoid coil may be located around the bobbin. The insulating layer may be located between the first solenoid coil and the second solenoid coil. The plunger may be biased away from the bobbin.

In various embodiments, a wire gauge of the second solenoid coil and a winding depth of second solenoid coil may be selected to generate a magnetic flux value that is equal to a magnetic flux value generated by the first solenoid coil. In various embodiments, a solenoid resistance coil value of the first solenoid coil may be equal to a solenoid resistance coil value of the second solenoid coil.

In various embodiments, an evacuation slide may be fluidly coupled to the valve outlet.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having, in accordance with various embodiments;
FIG. 2 illustrates an evacuation assembly with the evacuation slide in a deployed position, in accordance with various embodiments;
FIG. 3 illustrates a perspective view of a compressed fluid source for an evacuation assembly, in accordance with various embodiments;
FIG. 4A illustrates a cross-section view of a compressed fluid source valve assembly taken along the line A-A in FIG. 3, with the valve assembly in a closed position, in accordance with various embodiments;
FIG. 4B illustrates a cross-section view of a compressed fluid source valve assembly taken along the line B-B in FIG. 3, with the valve assembly in a closed position, in accordance with various embodiments;
FIG. 4C illustrates a cross-section view of a dual solenoid valve in the closed position, in accordance with various embodiments;
FIG. 5A illustrates a cross-section view of a compressed fluid source valve assembly taken along the line A-A in FIG. 3, with the valve assembly in an open position, in accordance with various embodiments;
FIG. 5B illustrates a cross-section view of a compressed fluid source valve assembly taken along the line B-B in FIG. 3, with the valve assembly in an open position, in accordance with various embodiments;
FIG. 5C illustrates a cross-section view of a dual solenoid valve in the open position, in accordance with various embodiments; and
FIG. 6 illustrates a schematic of an electrical circuit including dual solenoid coils, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option.

Surface lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

The systems and methods disclosed herein may find particular use in connection with aircraft evacuation assemblies. However, various aspects of the disclosed systems and methods may be adapted for performance in a variety of other inflatable assemblies, for example, inflatable raft assemblies, and/or any other assemblies having charged cylinders. As such, numerous applications of the present disclosure may be realized.

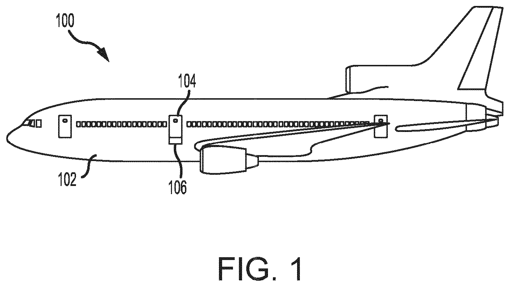

Referring now to FIG. 1, an aircraft 100 is shown. Aircraft 100 may include a fuselage 102 having plurality of exit doors, including exit door 104. Aircraft 100 may include one or more evacuation assemblies positioned near a corresponding exit door. For example, aircraft 100 includes an evacuation assembly 106 positioned near exit door 104. In the event of an emergency, exit door 104 may be opened by a passenger or crew member of aircraft 100. In various embodiments, evacuation assembly 106 may deploy in response to exit door 104 being opened or in response to another action taken by a passenger or crew member, such as the depression of a button, the actuation of a lever, or the like.

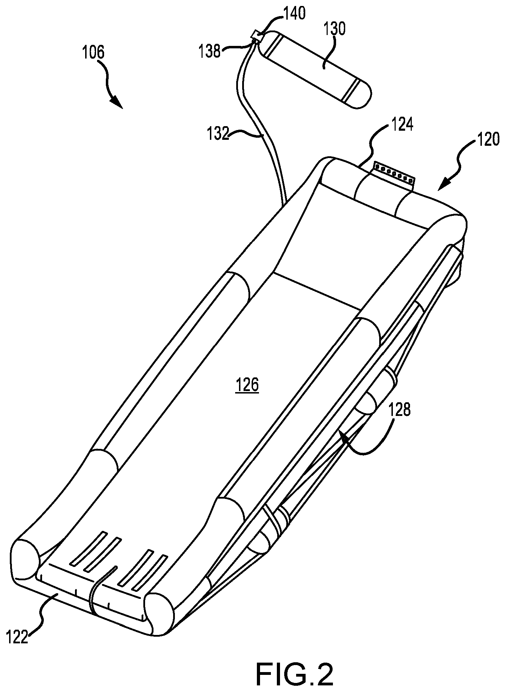

With reference to FIG. 2, additional details of evacuation assembly 106 are illustrated. In accordance with various embodiments, evacuation assembly 106 includes an evacuation slide 120 and a compressed fluid source 130. In accordance with various embodiments, evacuation slide 120 includes a toe end 122 and a head end 124 opposite toe end 122. Head end 124 may be coupled to an aircraft structure (e.g., fuselage 102 in FIG. 1). In accordance with various embodiments, evacuation slide 120 is an inflatable slide. Evacuation slide 120 includes a sliding surface 126 and an underside surface 128 opposite sliding surface 126. Sliding surface 126 extends from head end 124 to toe end 122. During an evacuation event, underside surface 128 may be oriented toward an exit surface (e.g., toward the ground or toward a body of water). Evacuation slide 120 is illustrated as a single lane slide; however, evacuation slide 120 may comprise any number of lanes.

Evacuation assembly 106 includes compressed fluid source 130 (also referred to as a charge cylinder). Compressed fluid source 130 is configured to deliver a pressurized gas to inflate evacuation slide 120. Compressed fluid source 130 is fluidly coupled to evacuation slide 120. For example, compressed fluid source 130 may be fluidly coupled to evacuation slide 120 via a hose, or conduit, 132. In response to receiving gas from compressed fluid source 130, evacuation slide 120 begins to inflate.

In accordance with various embodiments, conduit 132 may be connected to a valve outlet 138 of a valve assembly 140 fluidly coupled to compressed fluid source 130. In this regard, valve assembly 140 is fluidly coupled between compressed fluid source 130 and conduit 132. As described in further detail below valve assembly 140 is configured to regulate the flow of fluid from compressed fluid source 130 to evacuation slide 120. In this regard, when evacuation slide 120 is in a stowed (or deflated) state, valve assembly 140 is in a closed position. In response to deployment of evacuation assembly 106, valve assembly 140 translates to an open position, thereby allowing fluid to flow from compressed fluid source 130 to evacuation slide 120.

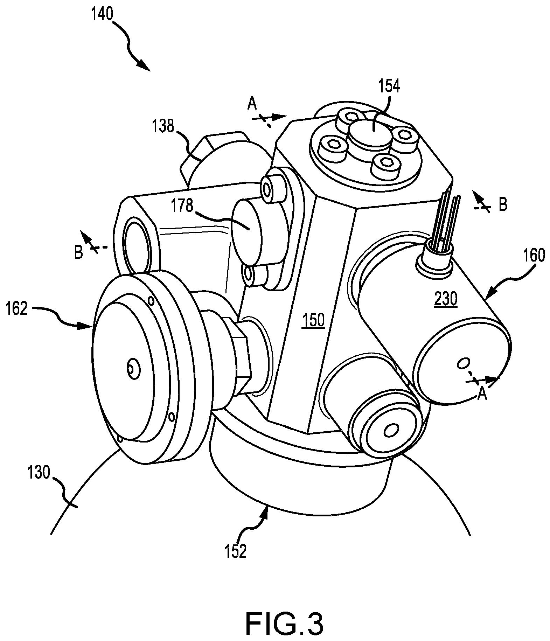

With reference to FIG. 3, additional details of valve assembly 140 are illustrated. In accordance with various embodiments, valve assembly 140 included a valve housing 150 (sometime referred to as a valve manifold). Valve housing 150 may define valve outlet 138 and a valve inlet 152 of valve assembly 140. Valve assembly 140 received fluid from compressed fluid source 130 through valve inlet 152. A cap 154 may form a fluid tight seal with valve housing 150. Valve assembly 140 includes a dual solenoid valve 160. Other components of compressed fluid source 130 may also be coupled to valve housing 150. For example, in various embodiments, a pressure gauge 162, configured to measure a pressure of compressed fluid source 130, may be operatively coupled to compressed fluid source 130 via valve assembly 140.

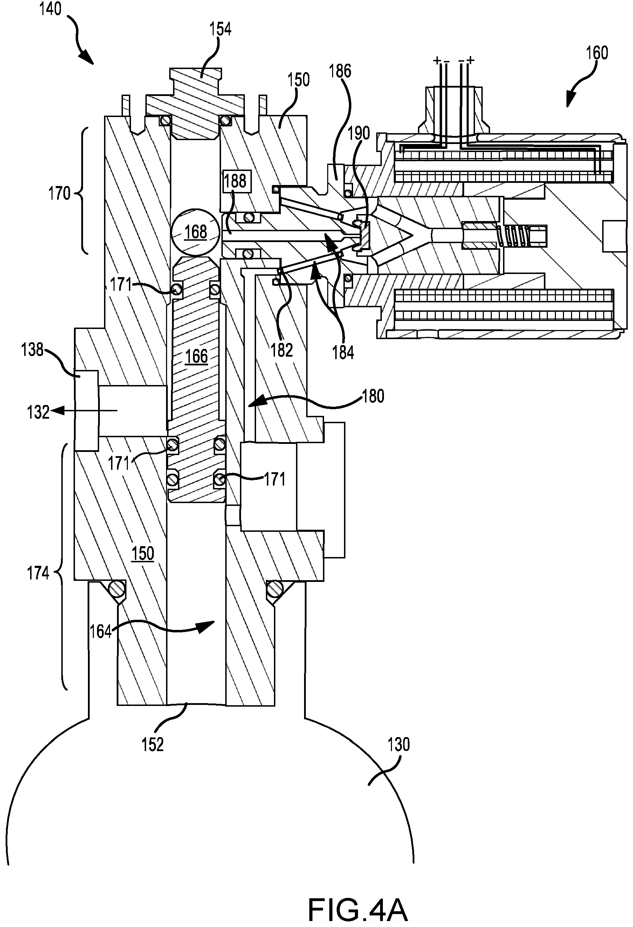

With additional reference to FIG. 4A, a cross-section view (taken along the line A-A in FIG. 3) of valve assembly 140 in the closed position is illustrated. In accordance with various embodiments, valve housing 150 may define valve inlet 152 and valve outlet 138 of valve assembly 140. Valve housing 150 may further define a main fluid channel 164 through valve housing 150. Main fluid channel 164 may be fluidly connect valve inlet 152 and valve outlet 138. A spool 166 is located in main fluid channel 164. In the closed position, spool 166 is located over valve outlet 138, such that spool 166 blocks, or otherwise prevents, the flow of fluid to valve outlet 138. In the closed position, a pin 168 is located in the path of spool 166, thereby generating an interference with spool 166 that blocks spool 166 from translating away from valve inlet 152 and toward cap 154.

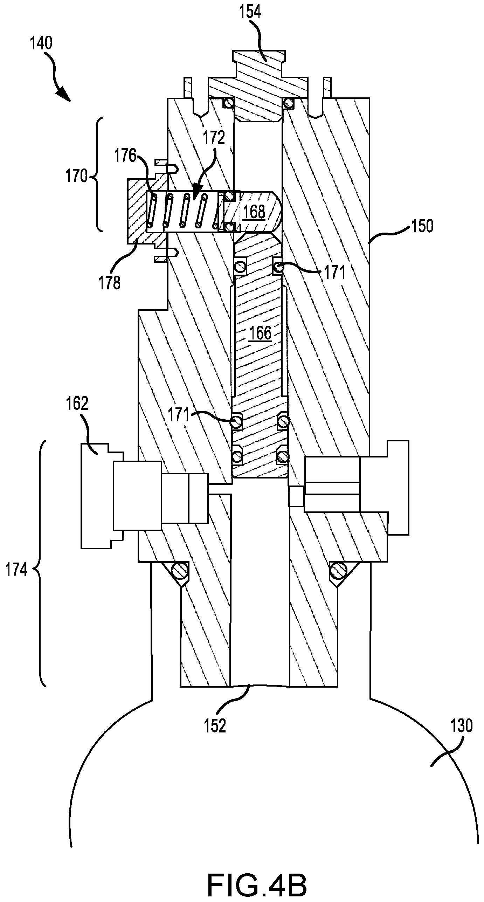

Referring to FIG. 4B, a cross section view, taken along line B-B in FIG. 3, of valve assembly 140 in the closed position is illustrated. In accordance with various embodiments, pin 168 may be biased toward an upper section 170 of main fluid channel 164. Pin 168 may be biased in a direction perpendicular to the direction in which spool 166 translates. Upper section 170 of main fluid channel 164 is located between spool 166 and cap 154, when valve assembly 140 is in the closed position. Stated differently, upper section 170 is located between a pin orifice 172, defined by valve housing 150, and cap 154. Pin 168 is located in pin orifice 172. Spool 166 and/or seals 171 located between spool 166 and valve housing 150 may fluidly seal a lower section 174 of main fluid channel 164 from upper section 170. Lower section 174 of main fluid channel 164 is located between valve outlet 138 and valve inlet 152. In various embodiments, a coil spring 176 may bias pin 168 toward upper section 170 of main fluid channel 164 and into the path of spool 166. Coil spring 176 may be located in pin orifice 172 and between pin 168 and a pin cap 178 coupled to valve housing 150. In the closed position, the pressure within upper section 170 of main fluid channel 164 is less than the biasing force applied by coil spring 176 to pin 168. The biasing force applied by coil spring 176 to pin 168 being greater than the pressure within upper section 170 results in pin 168 being located and maintained in the path of spool 166.

Returning to FIG. 4A, valve housing 150 may further define a secondary fluid channel 180. Secondary fluid channel 180 fluidly connects lower section 174 of main fluid channel 164 to an inlet 182 of a fluid path 184 defined by a fluid fitting 186. Fluid fitting 186 may be coupled to valve housing 150. An outlet 188 of fluid path 184 is configured to provide fluid to upper section 170 of main fluid channel 164. In this regard, when dual solenoid valve 160 is in the open position, fluid may flow from secondary fluid channel 180, through fluid path 184, and into upper section 170 of main fluid channel 164. In accordance with various embodiments, in the closed position, a valve seal 190 of dual solenoid valve 160 forms a fluid tight seal (i.e., a sealing interface) with fluid fitting 186, thereby fluidly sealing inlet 182 of fluid path 184 from outlet 188 of fluid path 184. The sealing interface formed between valve seal 190 and fluid fitting 186 prevents fluid from compressed fluid source 130 from flowing into upper section 170 of main fluid channel 164.

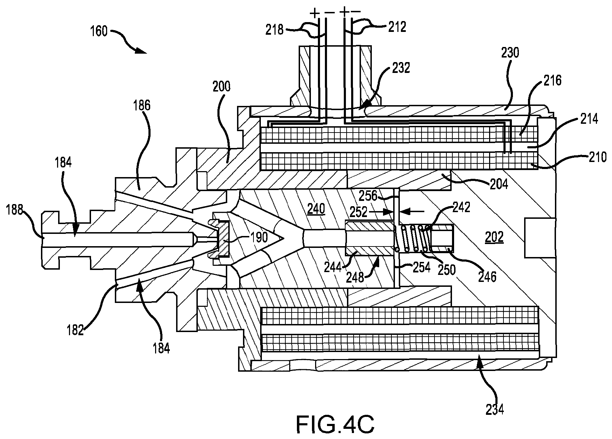

With reference to FIG. 4C, additional details of dual solenoid valve 160 are illustrated. In FIG. 4C, dual solenoid valve 160 is in the closed position. Dual solenoid valve 160 includes a core 200 and a bobbin 202. Core 200 may engage fluid fitting 186. Bobbin 202 may engage core fitting 204. Core fitting 204 is formed of a non-magnetic material. Core 200 and bobbin 202 are made of a magnetic material, such as a ferrous metal.

In accordance with various embodiments, a first (or inner) solenoid coil 210 is wrapped helically around core 200, bobbin 202, and core fitting 204. A first set of lead wires 212 (e.g., a positive lead wire and a ground lead wire) is electrically coupled to first solenoid coil 210. An insulating layer 214 is formed over an outer diameter of first solenoid coil 210. Stated differently, insulating layer 214 is radially outward of first solenoid coil 210. Insulating layer 214 may comprise one or more layers of epoxy or phenolic based resin, polyimide, lead(II) oxide (PbO), silicon dioxide (SiO₂), silicon nitride (Si₃N₄), silicon oxynitride (SiON), tantalum pentoxide (Ta₂O₅), aluminum oxide (Al₂O₃), or other material having similar electrically insulating properties.

A second (or outer) solenoid coil 216 is wrapped helically around insulating layer 214. A second set of lead wires 218 is electrically coupled to second solenoid coil 216. Second solenoid coil 216 is radially outward of first solenoid coil 210 and insulating layer 214. Insulating layer 214 is located radially between second solenoid coil 216 and first solenoid coil 210.

First and second solenoid coils 210, 216 are arranged such that, in response to receiving a constant voltage from a power source, the magnetic flux direction generated by first solenoid coil 210 is in the same direction as the magnetic flux direction generated by second solenoid coil 216. In various embodiments, second solenoid coil 216 may be designed (e.g., the wire gauge of second solenoid coil 216 and the winding depth of second solenoid coil 216 are selected) to generate a magnetic flux value, or ampere-turns, that is equal to the magnetic flux value, or ampere-turns, generated by first solenoid coil 210.

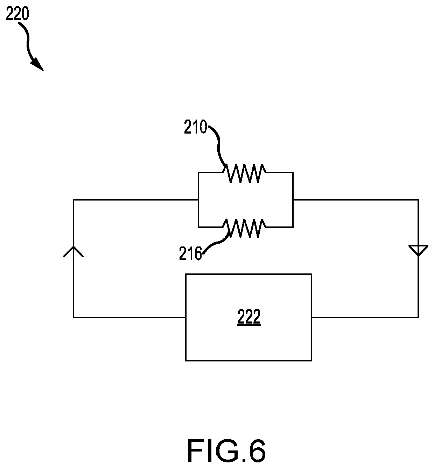

With reference to FIG. 6, a schematic of an electrical circuit 220 including first and second solenoid coils 210, 216 is illustrated. In various embodiments, second solenoid coil 216 may be arranged in parallel with first solenoid coil 210. A current may be supplied to first and second solenoid coils 210, 216 from a power source 222. Power source 222 may be configured to output a constant (e.g., direct) current.

When both first solenoid coil 210 and second solenoid coil 216 are functioning and generating magnetic flux (i.e., when neither first solenoid coil 210 nor second solenoid coil 216 is broken or otherwise not generating magnetic flux), the current passing through each of first solenoid coil 210 and second solenoid coil 216 will be proportionate to the respective coil resistance values. In accordance with various embodiment, the magnetic field generated by first solenoid coil 210 and second solenoid coil 216 together will be additive. For example, if the solenoid resistance coil value of first solenoid coil 210 is equal to the solenoid resistance coil value of second solenoid coil 216, the current passing through each of first solenoid coil 210 and second solenoid coil 216 is equal, or approximately equal, to one-half of the current output by power source 222. Should either first solenoid coil 210 or second solenoid coil 216 fail (e.g., break or otherwise stop current flow through the solenoid coil), the total current output by power source 222 will pass through the fault-free solenoid coil. Thus, the total magnetic flux, or ampere-turns, generated by the dual solenoid valve 160, with momentary reference to FIG. 4C, will be same when both first solenoid coil 210 and second solenoid coil 216 are working properly and when one of first solenoid coil 210 or second solenoid coil 216 is working properly and the other of first solenoid coil 210 and second solenoid coil 216 is faulty.

Returning to FIG. 4C, a cover 230 may be located around second solenoid coil 216. Cover 230 may be coupled, via adhesive, welding, fasteners, or any other suitable attachment to bobbin 202 and/or to core 200. Cover 230 may define a lead wire opening 232 through which the first set of lead wires 212 and the second set of lead wires 218 are located. Cover 230, bobbin 202, core 200, and core fitting 204 define a cavity 234 in which first solenoid coil 210, insulating layer 214, and second solenoid coil 216 are located.

Dual solenoid valve 160 further includes a plunger 240. Plunger 240 comprises a ferrous metal. Plunger 240 is configured such that plunger will translate in the magnetic flux direction generated by first and second solenoid coils 210, 216. In this regard, the magnetic field generated by first and second solenoid coils 210, 216 forces plunger 240 away from fluid fitting 186. Valve seal 190 is coupled to plunger 240 such that valve seal 190 translates with plunger 240 relative to fluid fitting 186. Plunger 240 is biased toward fluid fitting 186. In various embodiments, a coil spring 242 may bias plunger 240 toward fluid fitting 186. Coil spring 242 may be located between a spacer 244 of plunger 240 and a spacer 246 of bobbin 202. Spacer 244 may be located in a spacer cavity 248 defined by plunger 240. Spacer 246 may be located in spacer cavity 250 defined by bobbin 202. The biasing load generated by coil spring 242 may be applied to plunger 240 via spacer 244. In various embodiments, spacer 244 comprises a non-magnetic material.

In the closed position, the biasing load applied by coil spring 242 to plunger 240 creates a gap 252 between a surface 254 of plunger 240 and a surface 256 of bobbin 202. In the closed position, the biasing load applied by coil spring 242 to plunger 240 maintains a fluid tight seal between fluid fitting 186 and valve seal 190.

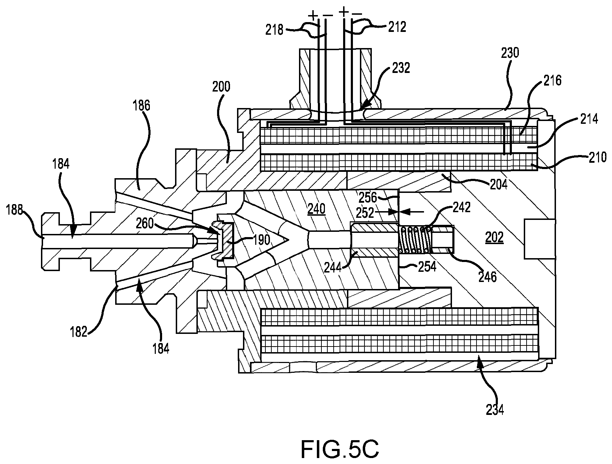

Referring now to FIG. 5C, dual solenoid valve 160 is illustrated in the open position. In response to receiving a current via first set of lead wires 212 and/or second set of lead wires 218, first solenoid coil 210 and/or second solenoid coil 216 generate a magnetic field. In various embodiments, current begins to flow to first solenoid coil 210 and/or second solenoid coil 216 in response to activation of power source 222. Power source 222 may be activated in response to deployment of evacuation assembly 106 (FIG. 1). For example, opening exit door 104 (FIG. 1) may activate power source 222 (FIG. 6) and/or close a circuit to electrically couple power source 222 to first and second solenoid coils 210, 216, and/or otherwise cause current to flow from power source 222 to first and second solenoid coils 210, 216. The electromagnetic force due to the magnetic flux value, or ampere-turns, generated by first solenoid coil 210 and/or by second solenoid coil 216 is greater than the biasing load applied by coil spring 242. The electromagnetic force being greater than the biasing load applied by coil spring 242, causes plunger 240 and valve seal 190 to translate away from fluid fitting 186, thereby creating a gap 260 between valve seal 190 and fluid fitting 186.

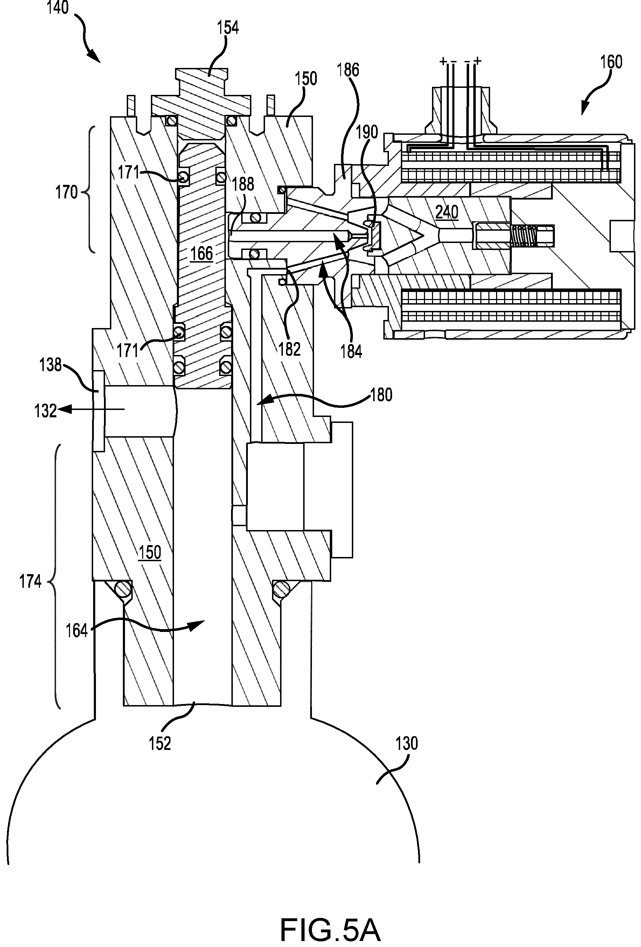

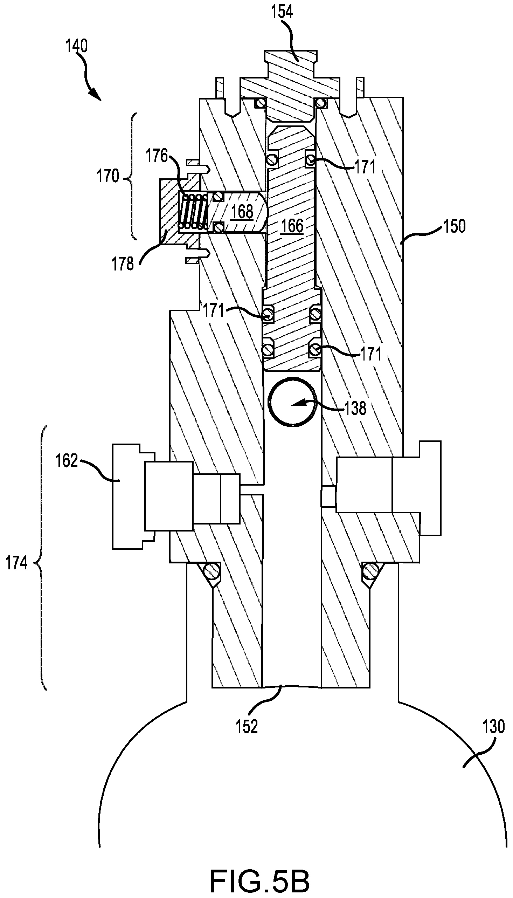

Referring additionally now to FIGs. 5A and 5B, valve assembly 140 is illustrated in the open position. The gap 260 between valve seal 190 and fluid fitting 186 fluidly connects inlet 182 and outlet 188 of fluid fitting 186, thereby allowably fluid from compressed fluid source 130 to flow from lower section 174 of main fluid channel 164 to upper section 170. In the open position, fluid from compressed fluid source 130 may flow from lower section 174 of main fluid channel 164, through secondary fluid channel 180 in valve housing 150 and fluid path 184 in fluid fitting 186, and into upper section 170 of main fluid channel 164. The increase in fluid volume in upper section 170 increases a pressure within upper section 170. The increase in pressure within upper section 170 forces pin 168 to translate toward pin cap 178. In this regard, pin 168 translates out of the path of spool 166, in response to the pressure within upper section 170 exceeding the biasing force applied by coil spring 176 to pin 168. In response to the interference between pin 168 and spool 166 being removed, the force applied to spool 166 by the fluid in lower section 174 causes spool 166 to translate away from valve inlet 152 and toward cap 154, thereby exposing valve outlet 138. The translation of spool 166 away from valve outlet 138, allows fluid to flow from valve inlet 152, through lower section 174 of main fluid channel 164, and out valve outlet 138. In this regard, in the open position, spool 166 does not block valve outlet 138 and fluid from compressed fluid source 130 may flow out valve outlet 138 and to evacuation slide 120 (FIG. 2).

Valve assembly 140 including a dual solenoid valve 160 may increase the reliability of valve assembly 140 and evacuation assembly 106 by providing a redundant solenoid coil. The redundant solenoid coil allows valve assembly 140 to translate to the open position should either of first solenoid coil 210 or second solenoid coil 216 break or otherwise fail.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A dual solenoid valve (160) for a compressed fluid source, the dual solenoid valve comprising:
a bobbin (202);
a core (200);
a core fitting (204);
a cover (230);
a first solenoid coil (210) located around the bobbin, the core, and the core fitting;
a second solenoid coil (216) located radially outward of the first solenoid coil;
an insulating layer (214) located between the first solenoid coil and the second solenoid coil; and
a plunger (240) biased away from the bobbin;
wherein the bobbin, the core, the core fitting, and the cover define a cavity in which the first solenoid coil, the second solenoid coil, and the insulating layer are located.

2. The dual solenoid valve of claim 1, further comprising:
a first set of lead wires (212) electrically coupled to the first solenoid coil; and
a second set of lead wires (218) electrically coupled to the second solenoid coil.

3. The dual solenoid valve of claim 1 or 2, wherein the second solenoid coil is arranged in parallel to the first solenoid coil.

4. The dual solenoid valve of any preceding claim, wherein a wire gauge of the second solenoid coil and a winding depth of second solenoid coil are selected to generate a magnetic flux value that is equal to a magnetic flux value generated by the first solenoid coil.

5. The dual solenoid valve of any preceding claim, wherein a solenoid resistance coil value of the first solenoid coil is equal to a solenoid resistance coil value of the second solenoid coil.

6. The dual solenoid valve of any preceding claim, further comprising a valve seal (190) configured to translate with the plunger.

7. The dual solenoid valve of claim 6, further comprising a fluid fitting (186) configured to form a fluid tight seal with the valve seal, wherein the fluid fitting defines a fluid path (184), and wherein in a closed position, the valve seal fluidly seals an inlet of the fluid path from an outlet of the fluid path.

8. A valve assembly (140) for a compressed fluid source, the valve assembly comprising:
a valve housing (150) defining a valve inlet (152), a valve outlet (138), and a main fluid channel (164) fluidly connecting the valve inlet and the valve outlet;
a spool (166) located in the main fluid channel, the spool being configured to fluidly seal the valve outlet from the valve inlet when the valve assembly is in a closed position; and
the dual solenoid valve (160) according to any preceding claim configured to open and close the valve assembly.

9. The valve assembly of claim 8, further comprising a fluid fitting (186) defining a fluid path, wherein the fluid path is configured to fluidly connect an upper section of the main fluid channel and a secondary fluid channel defined by the valve housing.

10. The valve assembly of claim 9, wherein in the closed position, the dual solenoid valve is configured to seal an outlet of the fluid path defined by the fluid fitting from an inlet of the fluid path defined by the fluid fitting.

11. The valve assembly of claim 10, wherein the dual solenoid valve further comprises a valve seal (190) configured to form a sealing interface with the fluid fitting when the valve assembly is in the closed position, and wherein in an open position, a gap is created between the fluid fitting and the valve seal, the gap being configured to allow fluid to flow from the inlet of the fluid path to the outlet of the fluid path.

12. The dual solenoid valve of claim 1, wherein the core fitting is formed of a non-magnetic material.

13. The dual solenoid valve of claim 1, wherein the core and the bobbin are made of a magnetic material.

14. The dual solenoid valve of claim 1, wherein the first solenoid coil is wrapped helically around the core, the bobbin, and the core fitting.

15. The dual solenoid valve of claim 1, wherein the second solenoid coil is wrapped helically around the insulating layer.

## Patentansprüche

1. Doppelmagnetventil (160) für eine Druckfluidquelle, wobei das Doppelmagnetventil Folgendes umfasst:
einen Spulenkörper (202);
einen Kern (200);
eine Kernarmatur (204);
eine Abdeckung (230);
eine erste Magnetspule (210), die um den Spulenkörper, den Kern und die Kernarmatur angeordnet ist;
eine zweite Magnetspule (216), die radial außerhalb der ersten Magnetspule angeordnet ist;
eine Isolierschicht (214), die zwischen der ersten Magnetspule und der zweiten Magnetspule angeordnet ist; und
einen Kolben (240), der vom Spulenkörper weg vorgespannt ist;
wobei der Spulenkörper, der Kern, die Kernarmatur und die Abdeckung einen Hohlraum definieren, in dem die erste Magnetspule, die zweite Magnetspule und die Isolierschicht angeordnet sind.

2. Doppelmagnetventil nach Anspruch 1, ferner umfassend:
einen ersten Satz von Anschlussdrähten (212), der elektrisch mit der ersten Magnetspule gekoppelt ist; und
einen zweiten Satz von Anschlussdrähten (218), der elektrisch mit der zweiten Magnetspule gekoppelt ist.

3. Doppelmagnetventil nach Anspruch 1 oder 2, wobei die zweite Magnetspule parallel zur ersten Magnetspule angeordnet ist.

4. Doppelmagnetventil nach einem der vorhergehenden Ansprüche, wobei ein Drahtdurchmesser der zweiten Magnetspule und eine Wicklungstiefe der zweiten Magnetspule so gewählt sind, dass ein magnetischer Flusswert erzeugt wird, der gleich einem magnetischen Flusswert ist, der von der ersten Magnetspule erzeugt wird.

5. Doppelmagnetventil nach einem der vorhergehenden Ansprüche, wobei ein Magnetwiderstandswert der ersten Magnetspule gleich einem Magnetwiderstandswert der zweiten Magnetspule ist.

6. Doppelmagnetventil nach einem der vorhergehenden Ansprüche, ferner umfassend eine Ventildichtung (190), die dazu konfiguriert ist, sich mit dem Kolben zu verschieben.

7. Doppelmagnetventil nach Anspruch 6, ferner umfassend eine Fluidarmatur (186), die dazu konfiguriert ist, eine fluiddichte Abdichtung mit der Ventildichtung zu bilden, wobei die Fluidarmatur einen Fluidweg (184) definiert und wobei die Ventildichtung in einer geschlossenen Position einen Einlass des Fluidwegs fluidisch von einem Auslass des Fluidwegs abdichtet.

8. Ventilbaugruppe (140) für eine Druckfluidquelle, wobei die Ventilbaugruppe Folgendes umfasst:
ein Ventilgehäuse (150), das einen Ventileinlass (152), einen Ventilauslass (138) und einen Hauptfluidkanal (164) definiert, der den Ventileinlass und den Ventilauslass fluidverbindet;
einen Schieber (166), der im Hauptfluidkanal angeordnet ist, wobei der Schieber dazu konfiguriert ist, den Ventilauslass vom Ventileinlass fluidisch abzudichten, wenn sich die Ventilbaugruppe in einer geschlossenen Position befindet; und
das Doppelmagnetventil (160) nach einem der vorhergehenden Ansprüche, das dazu konfiguriert ist, die Ventilbaugruppe zu öffnen und zu schließen.

9. Ventilbaugruppe nach Anspruch 8, ferner umfassend eine Fluidarmatur (186), die einen Fluidweg definiert, wobei der Fluidweg dazu konfiguriert ist, einen oberen Abschnitt des Hauptfluidkanals und einen durch das Ventilgehäuse definierten sekundären Fluidkanal fluidzuverbinden.

10. Ventilbaugruppe nach Anspruch 9, wobei das Doppelmagnetventil in der geschlossenen Position dazu konfiguriert ist, einen Auslass des durch die Fluidarmatur definierten Fluidwegs von einem Einlass des durch die Fluidarmatur definierten Fluidwegs abzudichten.

11. Ventilbaugruppe nach Anspruch 10, wobei das Doppelmagnetventil ferner eine Ventildichtung (190) umfasst, die dazu konfiguriert ist, eine Dichtungsschnittstelle mit der Fluidarmatur zu bilden, wenn sich die Ventilbaugruppe in der geschlossenen Position befindet, und wobei in einer offenen Position ein Spalt zwischen der Fluidarmatur und der Ventildichtung erzeugt wird, wobei der Spalt dazu konfiguriert ist, zu ermöglichen, dass Fluid vom Einlass des Fluidwegs zum Auslass des Fluidwegs fließt.

12. Doppelmagnetventil nach Anspruch 1, wobei die Kernarmatur aus einem nichtmagnetischen Material gebildet ist.

13. Doppelmagnetventil nach Anspruch 1, wobei der Kern und der Spulenkörper aus einem magnetischen Material hergestellt sind.

14. Doppelmagnetventil nach Anspruch 1, wobei die erste Magnetspule spiralförmig um den Kern, den Spulenkörper und die Kernarmatur gewickelt ist.

15. Doppelmagnetventil nach Anspruch 1, wobei die zweite Magnetspule spiralförmig um die Isolierschicht gewickelt ist.

## Revendications

1. Électrovanne double (160) pour une source de fluide comprimé, l'électrovanne double comprenant :
un bobinage (202) ;
un noyau (200) ;
un raccord de noyau (204) ;
un couvercle (230) ;
une première bobine de solénoïde (210) située autour du bobinage, du noyau et du raccord de noyau ;
une seconde bobine de solénoïde (216) située radialement à l'extérieur de la première bobine de solénoïde ;
une couche isolante (214) située entre la première bobine de solénoïde et la seconde bobine de solénoïde ; et
un plongeur (240) sollicité à l'opposé du bobinage ;
dans laquelle le bobinage, le noyau, le raccord de noyau et le couvercle définissent une cavité dans laquelle se trouvent la première bobine de solénoïde, la seconde bobine de solénoïde et la couche isolante.

2. Électrovanne double selon la revendication 1, comprenant en outre :
un premier ensemble de fils conducteurs (212) couplés électriquement à la première bobine de solénoïde ; et
un second ensemble de fils conducteurs (218) couplés électriquement à la seconde bobine de solénoïde.

3. Électrovanne double selon la revendication 1 ou 2, dans laquelle la seconde bobine de solénoïde est disposée parallèlement à la première bobine de solénoïde.

4. Électrovanne double selon l'une quelconque revendication précédente, dans laquelle un calibre pour fil de la seconde bobine de solénoïde et une profondeur d'enroulement de la seconde bobine de solénoïde sont sélectionnés pour générer une valeur de flux magnétique qui est égale à une valeur de flux magnétique générée par la première bobine de solénoïde.

5. Électrovanne double selon l'une quelconque revendication précédente, dans laquelle une valeur de bobine de résistance de solénoïde de la première bobine de solénoïde est égale à une valeur de bobine de résistance de solénoïde de la seconde bobine de solénoïde.

6. Électrovanne double selon l'une quelconque revendication précédente, comprenant en outre un joint de vanne (190) configuré pour se déplacer avec le plongeur.

7. Électrovanne double selon la revendication 6, comprenant en outre un raccord de fluide (186) configuré pour former une étanchéité au fluide avec le joint de vanne, dans laquelle le raccord de fluide définit un trajet de fluide (184) et dans laquelle, dans une position fermée, le joint de vanne scelle fluidiquement une entrée du trajet de fluide à partir d'une sortie du trajet de fluide.

8. Ensemble vanne (140) pour une source de fluide comprimé, l'ensemble vanne comprenant :
un boîtier de vanne (150) définissant une entrée de vanne (152), une sortie de vanne (138), et un canal de fluide principal (164) reliant fluidiquement l'entrée de vanne et la sortie de vanne ;
une bobine (166) située dans le canal de fluide principal, la bobine étant configurée pour sceller fluidiquement la sortie de vanne à partir de l'entrée de vanne lorsque l'ensemble vanne se trouve dans une position fermée ; et
l'électrovanne double (160) selon l'une quelconque revendication précédente configurée pour ouvrir et fermer l'ensemble vanne.

9. Ensemble vanne selon la revendication 8, comprenant en outre un raccord de fluide (186) définissant un trajet de fluide, dans lequel le trajet de fluide est configuré pour raccorder fluidiquement une section supérieure du canal de fluide principal et un canal de fluide secondaire défini par le boîtier de vanne.

10. Ensemble vanne selon la revendication 9, dans lequel, dans la position fermée, l'électrovanne double est configurée pour sceller une sortie du trajet de fluide défini par le raccord de fluide à partir d'une entrée du trajet de fluide défini par le raccord de fluide.

11. Ensemble vanne selon la revendication 10, dans lequel l'électrovanne double comprend en outre un joint de vanne (190) configuré pour former une interface d'étanchéité avec le raccord de fluide lorsque l'ensemble vanne se trouve dans la position fermée, et dans lequel, dans une position ouverte, un espace est créé entre le raccord de fluide et le joint de vanne, l'espace étant configuré pour permettre à un fluide de s'écouler à partir de l'entrée du trajet de fluide vers la sortie du trajet de fluide.

12. Électrovanne double selon la revendication 1, dans laquelle le raccord de noyau est formé d'un matériau non magnétique.

13. Électrovanne double selon la revendication 1, dans laquelle le noyau et le bobinage sont constitués d'un matériau magnétique.

14. Électrovanne double selon la revendication 1, dans laquelle la première bobine de solénoïde est enroulée de manière hélicoïdale autour du noyau, du bobinage et du raccord de noyau.

15. Électrovanne double selon la revendication 1, dans laquelle la seconde bobine de solénoïde est enroulée de manière hélicoïdale autour de la couche isolante.
